# EUROPEAN PATENT SPECIFICATION

(11) **EP 1 736 015 B1**
(45) Date of publication and mention of the grant of the patent: **04.09.2013**
(21) Application number: 05737646.9
(22) Date of filing: 15.04.2005
(51) Int. Cl.: H04W 76/02, H04M 3/42

(54) **SYSTEM AND METHOD FOR PROVIDING EARLY RINGBACK BY A HOME LEGACY MOBILE STATION DOMAIN NETWORK**
SYSTEM UND VERFAHREN ZUR BEREITSTELLUNG EINES FRÜHEN RÜCKRUFS DURCH EIN HOME-LEGACY-MOBILSTATIONS-DOMÄNEN-NETZWERK
SYSTEME ET PROCEDE POUR LA REALISATION D'UN RETOUR D'APPEL ANTICIPE PAR UN RESEAU DOMESTIQUE DE DOMAINE EXISTANT DE STATION MOBILE

(30) Priority: 16.04.2004 US 562924 P
(43) Date of publication of application: 27.12.2006
(73) Proprietor: BlackBerry Limited, Waterloo ON N2L 3W8 (CA)
(72) Inventor: BIENN, Marvin, Dallas, TX 75252 (US); BHARATIA, Jayshree, Plano, TX 75075 (US); NESARGI, Sanket, Richardson, TX 75080 (US)
(74) Representative: Fennell, Gareth Charles
(86) International application number: PCT/US2005/012796
(87) International publication number: WO 2005/104574

(56) References cited:
- US-A- 6 055 443
- US-A1- 2002 051 518
- US-A1- 2002 168 987
- US-A1- 2003 027 569
- US-A1- 2003 224 795

## Description

### FIELD OF THE INVENTION

The present invention relates to telecommunication technologies and, more particularly, to mechanisms for providing call progress (e.g., audible ringback tones) to a calling party. Still more particularly, the present invention provides a system and method for providing call progress when the called party is being served by a legacy mobile station domain (LMSD) and the call origination message is from a Global Switching Telephone Network (GSTN).

### BACKGROUND OF THE INVENTION

A call progress signal is a mechanism for alerting (for example, by an audible, visual, physical, or other sensory indication) the calling party that the call is being processed. When the called party is using a mobile device, the process of locating and alerting the subscriber can result in latencies much longer than that normally encountered with non-mobile devices. For circuit₋switched networks, when and whether call progress is generated is a function of the terminating exchange (i.e., the exchange serving the called party) local policy. Call progress in circuit-switched networks is generated in-band, that is by using the same bearer path that is also used for the calling party-to-called party voice path. The bearer path (that is, the physical connection which may include copper cables, fiber optic cable, microwave, etc.) in circuit-switched networks is established at the same time and through the same network elements as the call setup signal path.

For call delivery, the call setup signaling for the dialed telephone number is routed to an exchange for which the telephone number is assigned. The relationship between the exchange and the telephone number is static. When the dialed telephone number is assigned to a code division multiple access (CDMA) wireless subscriber (that is a subscriber that uses a wireless terminal device like a mobile station that supports connectivity to a CDMA access network) and the exchange to which the telephone number is assigned supports 3^{rd} Generation Partnership Project 2 (3GPP2) LMSD operations, the exchange is referred to as a Home Mobile Switching Center emulation (MSCe). An LMSD network is different that of a circuit-switched network for the call setup signaling, and call bearer paths in such networks are established at different times and through different network elements. An LMSD network allows operators supporting CDMA wireless subscribers a richer set of service features that cannot be supported by a circuit-switched network.

For call delivery scenarios where the call origination message is routed to the Home MSCe through a GSTN, the Home MSCe will 1) determine if the subscriber is presently authorized to receive incoming calls, 2) locate the mobile station (MS), 3) setup a bearer connection to the bearer part of the GSTN for the call, and 4) route the call request to the MSCe or exchange presently serving the MS (assuming the MS is not within the geographical serving area of the Home MSCe). If the MS is being served by an MSCe other than the Home MSCe, then the bearer path (from the GSTN to the Serving MSCe) cannot be established until the MS has been paged and the terminal device capabilities of the MS (e.g., what type of voice codecs the MS supports) have been determined. In some situations, the time requirement for bearer establishment between the GSTN and the Serving MSCe and for the generation of call progress from the network serving the called party back to the calling party can be uncomfortable. This uncomfortable sensation (e.g., the calling party only hearing silence) may result in the calling party terminating the call before call setup has been completed.

US 6055443 discloses a cellular modem pool which provides can progress information for a calling party.

### SUMMARY OF THE INVENTION

For call delivery scenarios, it is advantageous (from the point of the network operator controlling the exchange for which the dialed telephone number is assigned) to provide call progress to the calling party as soon as possible. For LMSD networks where the call origination message is routed to the Home MSCe though a GSTN, embodiments described herein provide for the home network to generate a call progress signal until the serving network is capable to generate the call progress signal. Particularly, embodiments described herein provide for the home network to provide a call progress signal until a bearer path between the GSTN and the serving network has been established.

The invention provides the method of claim 1, computer readable medium of claim 8 and system of claim 15.

### BRIEF DESCRIPTION OF THE DRAWINGS

For a more complete understanding of the present invention, the objects and advantages thereof, reference is now made to the following descriptions taken in connection with the accompanying drawings in which:
Fig. 1 is a simplified diagram of an embodiment of a system for handling circuit-switched operations in a telecommunications system having a packet switched network;
Fig. 2 is a diagram of embodiments of a signal and message exchange sequence for providing call progress to a calling party;
Fig. 3 is a flowchart of embodiments for call processing performed by a home network;
Fig. 4 is a flowchart of embodiments for call processing performed by a serving network.

### DETAILED DESCRIPTION

The present disclosure relates generally to telecommunication systems and, more specifically, to a mechanism for providing call progress to a calling party when the terminal device supporting the dialed telephone number is being served by an MSCe outside the serving area of the Home MSCe to which the GSTN call origination message was routed to. Call progress is referred to herein as a signal (e.g., an audible signal, visual signal, physical signal, or another sensory indication) sent to the calling party prior to the called party answering that informs the calling party that call establishment is proceeding.

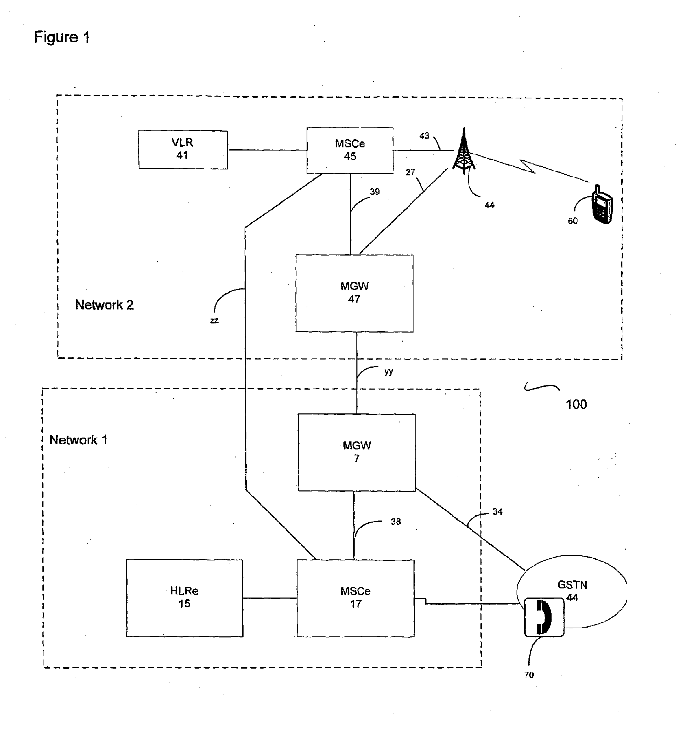

It is to be understood that the following disclosure provides many different embodiments, or examples, for implementing different features of various embodiments. Specific examples of components and arrangements are described below to simplify the present disclosure. These are, of course, merely examples and are not intended to be limiting. In addition, the present disclosure may repeat reference numerals and/or letters in the various examples. This repetition is for the purpose of simplicity and clarity and does not in itself dictate a relationship between the various embodiments and/or configurations discussed. FIG. 1 is a simplified diagram of an embodiment of a telecommunications system that supports Legacy Mobile Station Domain (LMSD) operations according to the 3^{rd} Generation Partnership Project 2 (3GPP2) standards. In the following discussion, numerous specific details are set forth to provide a thorough understanding of the present invention. However, it will be apparent to those skilled in the art that the present invention can be practiced without such specific details. In other instances, well-known elements have been illustrated in schematic or block diagram form in order not to obscure the present invention in unnecessary detail. It is further noted that functions described herein may be performed by a processor such as a computer or electronic data processor in accordance with code such as computer program code, software, and/or integrated circuits that are coded to perform such functions.

Telecommunications system 100 may include first and second packet LMSD networks 1 and 2 that may communicate with one another across reference points yy and zz. In the illustrative examples provided herein, network 1 is a home network to a mobile station (MS) 60 and includes a home location register emulator (HLRe) 15 and a call control entity, such as a mobile switching control emulator (MSCe) 17. Additionally, network 1 also includes a media gateway (MGW) 7. HLRe 15 manages the subscriber profile for voice services (e.g., Three Way Calling, Call forwarding, and the like) and data services (e.g., Priority). Subscriber profile information may be accessed from HLRe 15 or may be downloaded to a system serving the subscriber system as needed. In the present example, HLRe 15 is the home HLRe to MS 60, and thus the directory number of MS 60 is registered as such with HLRe 15.

In FIG. 1, MSCe 17 provides the signaling functionality equivalent to that defined for a legacy MSC (that is, a 3GPP2 call control entity that only supports circuit-switched operations). Part of the signaling functionality supported by MSCe 17 includes the establishment, maintenance and termination of voice calls, the ability to modify an established call (e.g., the establishment of a three-way call after the establishment of a two-way call), and triggers to other network elements for the support of subscriber specific features (e.g., prepaid calling). MSCe 17 supports the signaling connectivity (e.g., IP connectivity) to other LMSD networks through interface zz. Additionally MSCe 17 may interface to a circuit-switched network, such as GSTN 44, thereby allowing for the interworking between GSTN call control protocols (e.g., Integrated Services Digital Network (ISDN) Users Part) and IP call control protocols (e.g., Session Initiation Protocol (SIP)). MGW 7 may provide an interface 34 between the packet environment (e.g., IP transport) of Network 1 and the circuit-switched environment of GSTN 44 for bearer traffic. MGW 7 may provide vocoding and/or transcoding functions. For example, MGW 7 may provide for conversion of a voice data format, such as enhanced variable rate codec (EVRC), into another voice data format, such as G.711, to the bearer traffic. MGW 7 may support tones (e.g., dual-tone multifrequency (DTMF) digits), announcements and bridging capabilities. MGW 7 supports the bearer traffic connectivity (e.g., IP connectivity) to other LMSD networks though interface yy. MSCe 17 manages the bearer resources of MGW 7 through signaling (e.g., H.248) sent over interface 38. A circuit-switched call device 70 (also referred to herein as a call originator) that initiates a call to a mobile station, such as MS 60, that has roamed outside the serving area of its home network may have call progress provided thereto by embodiments described herein.

Network 2 includes a call control entity, such as MSCe 45, that interfaces with a MGW 47. Additionally, MSCe 45 interfaces with a visitor location register (VLR) 41. VLR 41 maintains temporary subscription data for mobile stations currently registered in the service area of MSCe 45. MSCe 45 communicates with a base station (BS) 44 using interface 43. Base station 44 communicates with MS 60 over the radio interface. Network 2 also includes support for an MGW 47 to base station 44 bearer interface 27 and MSCe 45 to MGW 47 signaling interface 39.

In general, for delivering a call that originated from GSTN 44 to MS 60 that is presently being served by a network other than its home network, MSCe 17 will determine whether MS 60 is allowed to receive calls by communicating with HLRe 15 (for example, by way of TIA/EIA-41 protocols). HLRe 15 which contains that last known network location of MS 60 will contact the last known network to determine if MS 60 is still registered in that network. HLRe 15 reports the exchange that is presently serving MS 60 (e.g., MSCe 45) back to MSCe 17. MSCe 17 determines what call control protocol (e.g., SIP or ISUP) to use for routing the call setup messaging to MSCe 45 and what type of transport (e.g., IP or SS7) should be used for communication between MSCe 17 and MSCe 45. If MSCe 17 determines that a call control protocol different than the call control protocol used by the GSTN is necessary for communicating with MSCe 45, then MSCe 17 is responsible for the conversion (e.g., ISUP to SIP).

MSCe 17 also signals to MGW 7 (for example, through employment of a device control protocol, such as the H.248 protocol) instructions for the creation of a bearer path between GSTN 44 and network 2. MSCe 17 will instruct MGW 7 as to whether MGW 7 should convert the non-packet switched (PS) bearer transport (e.g., TDM) to a PS traffic bearer (e.g., IP), or whether the non-PS bearer transport should remain unchanged.

MSCe 45, upon receiving a call request from MSCe 17, will attempt to page MS 60 by communicating a Paging Request to BS 44 (for example, by way of interoperability specification (IOS) protocols) over interface 43. After MS 60 answers the page, BS 44 will determine MS 60 capabilities (e.g., the voice codecs supported by MS 60) and relay them to MSCe 45. MSCe 45 signals to MGW 47 (for example, through employment of a device control protocol, such as the H.248 protocol) instructions for the creation of a bearer path between MGW 7 and BS 44. Based upon information received in the call request from MSCe 17 and MS 60 capabilities, MSCe 45 may also instruct MGW 47 to place a transcoder in the bearer path between MGW 7 and BS 44.

Network 1, with its included network entities and associated interfaces, comprises a wireless network such as a LMSD network. Network 2, with its included network entities and associated interfaces, also comprises a wireless network such as a LMSD network. Network entities including HLRe 15, MSCe 17, MSCe 45, MGW 7, MGW 47, and interfaces 27, 34, 38, 39, 43, yy, and zz can employ protocols based on existing open-standards. Examples of open-standards are H.248 for interfaces 38 and 39, SIP for interface zz, IP or ATM for interface yy, and IOS for interface 43.

The network architecture model depicted in FIG. 1 is a functional block diagram. As used herein, a network entity represents a group of functions and is not necessarily implemented as a physical device. The physical realization is an implementation issue. A manufacturer may choose a physical implementation of network entities, either individually or in combination, as long as the implementation meets the functional requirements. Sometimes, for practical reasons, the functional network entity is a physical device. A mobile station, for example, comprises a functional entity that is also a physical device.

Networks 1 and 2 may have the capability of processing mobility management and call control messages. That is, MSCe 45 is also capable of supporting call control signaling for MS 60 to originate a call.

A serving network, as referred to herein, comprises a network in which the terminal device is currently registered. Call progress is referred to herein as a signal (e.g., an audible signal, a visual signal, a physical signal, or another sensory indication) sent to the calling party prior to the called party answering that informs the calling party that call establishment is proceeding.

Embodiments described herein provide a mechanism for a serving LMSD network to signal a home LMSD network to provide call progress over a bearer path from a home MGW to the GSTN. Embodiments described herein also provide a mechanism for the serving LMSD network to signal the home LMSD network to discontinue any call progress. For example, the serving LMSD network may signal the home LMSD network to discontinue any call progress provided to the originating exchange because a bearer path from the GSTN to the serving MGW has been established, and the serving LMSD network desires to provide call progress.

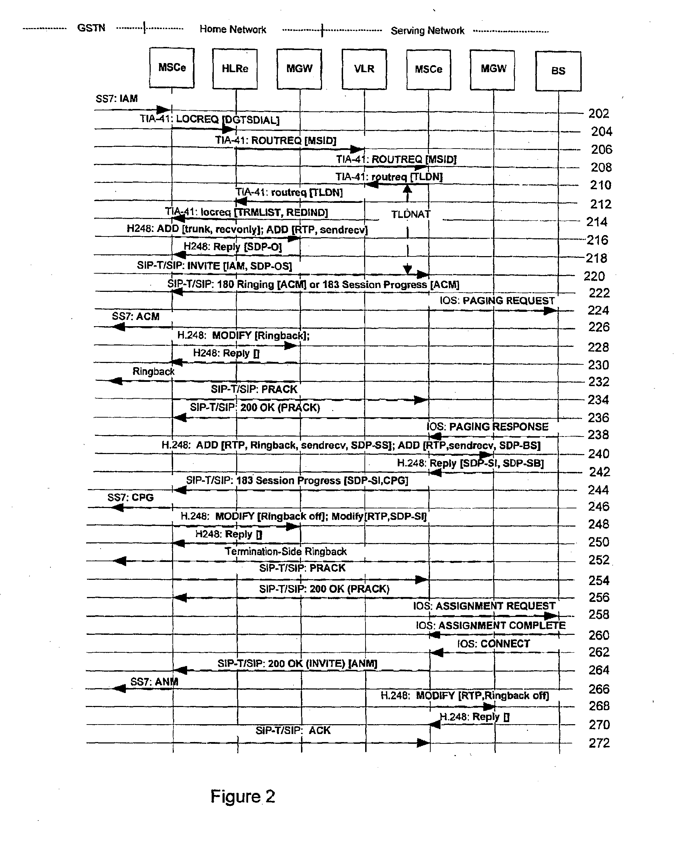

Figure 2 is a diagram of embodiments of a signal and message exchange sequence for providing call progress to a calling party. Particularly, embodiments described herein provide a mechanism for providing call progress to a calling party when the call origination message is from a GSTN and the dialed telephone number comprises a terminal device that has roamed from a home network to a serving network. More particularly, embodiments described herein provide for call progress to be instigated by a home LMSD network on request of the serving LMSD network, and for the serving LMSD network to provide call progress after directing the home LMSD network to discontinue call progress.

A call origination message is routed, possibly from a circuit-switched device 70, though a GSTN, such as GSTN 44 (step 202). The call origination message is received by the home network of the terminal device. For illustrative purposes, assume the directory number is assigned to a terminal device which in turn is assigned to network 1, and that the terminal device has roamed into network 2. Thus, network 1 is representative of the home network of the called terminal device, and network 2 is representative of the serving network of the called terminal device. The call origination message and the dialed address digits, i.e., the directory number of the called terminal device, are received by the home MSCe of the terminal device. For example, the call origination message and corresponding dialed MS address may be delivered to the home MSCe by way of an Integrated Services Digital Network (ISDN) Users Part (ISUP) Initial Address Message (lAM).

The home MSCe then commences a location procedure to identify the present location of the terminal device. For example, the home MSCe, responsive to receipt of the call origination and dialed address digits, then interrogates the HLRe associated with the terminal device (step 204). The interrogation may comprise a TIA-41 location request (LOCREQ) that includes the dialed address digits (DGTSDIAL) passed as parameters thereof to the HLRe. The HLRe then queries subscriber data maintained thereby to determine if the dialed address digits are assigned to a legitimate subscriber and an associative terminal device. Assuming the dialed address digits are assigned to a legitimate subscriber, the HLRe then identifies a VLR in a serving network where the called terminal device is last listed as registered and sends a TIA-41 route request (ROUTREQ) thereto (step 206). The route request message may include a mobile station identifier (MSID) of the called terminal device. The serving VLR then forwards the route request to the current serving MSCe (step 208). The MSCe may evaluate internal records maintained thereby to determine if the called terminal device is currently engaged in a call on the serving MSCe. The serving MSCe allocates a temporary local directory number (TLDN), and returns this information to the serving VLR (step 210). Additionally, the MSCe starts a temporarily local directory number association timer (TLDNAT). The TDLN along with any additional information for the serving MSCe is returned to the home network HLRe (step 212). The home HLRe returns a location request response to the home MSCe (step 214). The location request response may include routing information passed as parameters thereof, such as a termination list (TRMLIST) and an indication for extending the incoming call that is included in a DMH_Redirectionlndicator (REDIND) passed as a parameter of the location request. The home MSCe completes the terminal device location by translating the TLDN to a serving MSCe IP address and UDP port number pair, and a serving MSCe SIP universal resource identifier (URI).

Since the location information obtained by the home MSCe identifies the location of the terminal device as within another serving LMSD, the home MSCe is able to utilize an IP call control protocol (e.g., SIP) and a packet-based bearer transport (e.g., IP) between the home and serving network. To this end, the home MSCe maps the GSTN call control protocol (e.g., ISUP) to SIP for session establishment. Additionally, the home MSCe signals a home MGW to setup a connection that will convert the TDM bearer data of the GSTN to packet data bearer, e.g., real-time transport protocol (RTP) over IP, for data transmission across the home LMSD network to the serving LMSD network. To this end, the home MSCe establishes a context with a home MGW (step 216). Establishment of the context between the home MSCe and the home MGW may be made by way of an H.248 message that comprises two ADD commands. The first ADD command establishes a termination to the GSTN communication channel, for example a DSO on a T1 or El trunk, that corresponds to the incoming call origination. The communication channel mode may be set to receive only (recvonly) to facilitate fraud protection. The second ADD command establishes a termination for a bearer channel using RTP. The home MGW replies to the home MSCe by sending an H.248 Reply message containing a local Session Description Protocol (SDP) message (designated SDP-O) for the home MGW (step 218). The information within SDP-O may include items like the IP address and UDP port number for which the home MGW desires to receive bearer data on and possibly a list of transcoders that the home MGW supports.

In response to receiving the Reply message and using the information within the call origination message received in step 202, the home MSCe constructs a SIP INVITE message containing SDP-OS as payload. SDP-OS may be identical to SDP-O, or the home MSCe may elect to modify certain parameters (e.g., codecs) based upon local policy. The SIP INVITE may also contain the call origination message (e.g., IAM) received in step 202. The SIP INVITE is sent to the serving MSCe (step 220). Upon receiving the SIP INVITE message, the serving MSCe uses the TLDN to identify the association between the SIP INVITE message and the MSID received in the route request message received thereby as described above with reference to step 208. On receipt of the INVITE message, the serving MSCe also terminates the TLDNAT timer.

In a preferred embodiment, it is desired to provide some type of call progress back to the calling party as soon as possible. The serving network cannot provide call progress until after the bearer path between the Serving MGW and the GSTN has been established. Thus it is preferable that the serving network direct the home network to provide call progress to the calling party since the bearer path from the home MGW to the GSTN has already been established according to step 218. The process of signaling the home network to generate call progress commences with the serving network responding to the SIP INVITE message. The ability to instigate call progress by the serving network is facilitated by a SIP provisional response that may be returned to the home network in response to receipt of the SIP INVITE. The serving MSCe, in response to receiving the INVITE message from the home MSCe, may provide a ringing message or a session progress message to the home MSCe (step 222). For example, the serving MSCe may send a provisional ringing response (e.g., a SIP 180 ringing message) or a provisional session progress message (e.g., a SIP 183 session progress message). The provisional response, whether a 180 ringing or a 183 session progress message, may include an address complete message (ACM). For the present illustrative example, assume that the serving MSCe provides a provisional 180 ringing message at step 222 to the home MSCe thereby providing an indication to the home network that the serving network wants the home network to start generating call progress (e.g., audible ringback tones) to the calling party. Additionally, upon receiving the SIP INVITE the serving MSCe sends a Paging Request message to the BS to initiate a mobile terminated call setup (step 224). The Paging Request message contains a desired codec that the serving MSCe would like the terminated mobile to use, if possible.

The home MSCe, upon receipt of the Ringing or Session Progress message, sends an address complete message (ACM) to the exchange from which the call origination message was sent from (step 226). In the event that the home MSCe received a Ringing message from the serving MSCe at step 222, an H.248 message containing a MODIFY command is sent to the home MGW (step 228). The MODIFY command instructs the home MGW to start sending call progress (e.g., audible ring tones) back to the GSTN. The home MGW acknowledges the MODIFY message with an H.248 Reply message (step 230). If call progress from the home MGW is initiated, then call progress is sent towards the GSTN (step 232). Thus, the calling party is provided with call progress from the home network responsive to receipt of signaling from the serving network that directs the home network to provide early ringback.

Additionally, the home MSCe may send a provisional response acknowledgment (PRACK) message to the serving MSCe (step 234) to confirm receipt of the provisional message conveyed according to step 222, and the serving MSCe may acknowledge receipt of the PRACK message, e.g., by way of a SIP 200 OK message (step 236).

The terminal device eventually replies to the paging request transmitted thereto (step 238). For example, the BS serving the terminal device constructs a Paging Response message, places it in a Complete Layer 3 Information message, and sends the information message to the serving MSCe. The paging response message may include, for example, the codec chosen by the terminal device, a list of available BS transcoders, and connection information for the BS communications channel (e.g., the IP address and UDP port for which the BS desires to receive bearer data associated with a call to the terminal device).

Based on the paging response and associative information (e.g., which BS radio is actually in communications with the terminal device), the serving MSCe can select a serving MGW that has connectivity with the BS radio for establishing a context. The criteria that the serving MSCe uses to select a particular serving MGW is based on local policy. Once a serving MGW is selected, a context may be established by way of an H.248 message comprising two ADD commands. A first ADD command establishes a termination for a bearer channel using RTP towards the home MGW. The mode is set to sendrecv for a bi-directional flow.

In accordance with embodiments described herein, the serving MSCe may elect to initiate termination-side ringback once the serving MSCe obtains a paging response from the terminal device. In this event, the first ADD command conveyed in the context establishment described in step 240 may include a parameter instructing the serving MGW to initiate call progress back to the home MGW. In the illustrative example, assume that the ADD command provided by the serving MSCe includes a parameter for initiating call progress. Additionally, the first ADD command includes the remote SDP (SDP-SS) containing the connection information for establishing an IP connection to the home MGW. SDP-SS may be identical to SDP-OS. The second ADD command establishes a termination for the BS communication channel with a mode set to sendrecv and includes SDP-BS. SDP-BS contains the BS connection information received by the serving MSCe in the paging response message described in step 238. The serving MGW acknowledges the H.248 message by providing a Reply message to the serving MSCe (step 242). The Reply message includes SDP-SI and SDP-SB. SDP-SI is the local SDP for the termination towards the home MGW. SDP-SI contains the IP address and UDP port number for which the serving MGW desires the home MGW to send bearer data to for the call being setup to the termination device. SDP-SB is the local SDP for the termination towards the serving BS. SDP-SB contains the IP address and UDP port number for which the serving MGW desires the serving BS to send bearer data for the call being setup to the termination device.

In accordance with embodiments described herein, the serving MSCe may signal the home MSCe to discontinue providing call progress (e.g., in the event that the serving network desires to generate the call progress). To this end, the serving MSCe may send a session progress message, e.g., a SIP 183 session progress message, that contains SDP-SI and an optional call progress (CPG) message to the home MSCe (step 244). The session progress message includes information (e.g., the information within SDP-SI) used to set up the bearer connection between the home MGW and the serving MGW. If the session progress message contains a CPG message, the home MSCe sends a CPG towards the originating exchange (step 246).

The session progress message received by the home MSCe at step 244 provides an indication to the home MSCe that the terminating device has been located. Accordingly, the session progress message provides a trigger for the home network to discontinue call progress in the event that call progress was initiated by the home network. To this end, the home MSCe sends an H.248 message to the home MGW in response to receiving the session progress message described with reference to step 244 (step 248). The H.248 message includes a MODIFY command if the home MSCe received a session progress message in step 222, or the H.248 message includes two MODIFY commands if the home MSCe received a ringing message in step 222. The first modify command contains a remote SDP, i.e., SDP-SI. SDP-SI is the remote SDP containing the connection information of the serving MGW. The second MODIFY command, if present, terminates call progress from the home MGW to the GSTN.

The home MGW acknowledges the H.248 message by returning a Reply message to the home MSCe (step 250). If the serving network elected to initiate call progress in step 240, then call progress can be sent from the serving MGW through the home MGW to the GSTN (step 252).

The home MSCe may supply an acknowledgment of the session progress message sent thereto as described with reference to step 244 by sending a provisional response acknowledgment message to the serving MSCe (step 254), and the serving MSCe may then reply thereto (step 256).

The serving MSCe may begin setting up the called terminal device after receiving a paging response as described in step 238. To this end, the serving MSCe sends an assignment request message (ASSIGNMENT REQUEST) to the base station to request assignment of radio resources (step 258). The assignment request message includes the serving MGW connection information. For example, the assignment request message may include information from SDP-SB, such as the IP address and UDP port number for which the serving MGW desires the serving BS to send bearer data to for the call being setup to the terminal device, a request for the BS to perform transcoding (if necessary), and the codec assignment for the called terminal device. Once the BS has allocated the necessary resources, an assignment complete message is returned to the serving MSCe (step 260). Additionally, the BS sends a connect message to the serving MSCe to indicate that the called terminal device has answered the call (step 262).

After the serving MSCe has received both the acknowledgement message as described in step 254 and the connect message (that is the user of the terminal device has accepted the call request from the calling party) as described in step 262, the serving MSCe sends a SIP 200 OK message to the home MSCe that may contain an answer message (ANM) (step 264). The SIP 200 OK message acknowledges the SIP INVITE message received in step 220 has successfully been completed. The home MSCe then sends an ANM back toward the GSTN (step 266).

In the event that call progress had been previously established in the serving network, the serving MSCe sends an H.248 message to the serving MGW to discontinue call progress (step 268). For example, the H.248 message may contain a MODIFY command directing the serving MGW to terminate call progress back to the home MGW. The serving MGW then replies to the request for call progress termination (step 270). Additionally, an acknowledgement message (e.g., SIP ACK) is sent from the home MSCe to the serving MSCe to acknowledge that the INVITE acknowledgement (i.e., the SIP 200 OK) was received by the home MSCe (step 272).

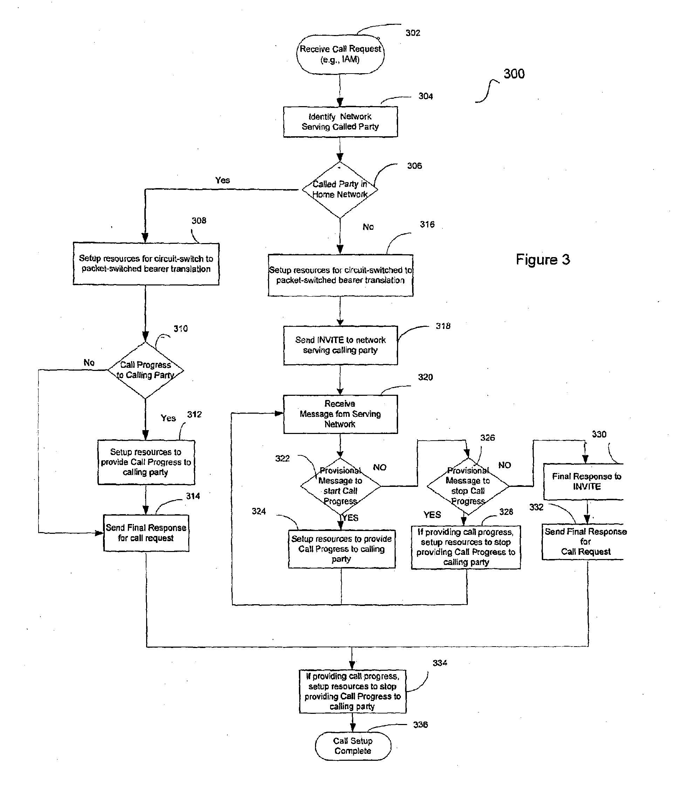

Figure 3 is a flowchart 300 of embodiments for call processing performed by a home network. Call processing procedures depicted in Figure 3 are representative of processing performed from the aspect of a home network MSCe, and not all functions performed for call processing are shown. Rather, the processing steps shown in Figure 3 are pertinent to call progress provisioning.

The call processing routine begins on receipt of a call request by the home MSCe (step 302). The home MSCe determines (e.g., by way of steps 204-214 shown in Figure 2) the network serving the called party (step 304). The home MSCe then determines whether the called device is located within the home network (step 306). In the event the called device is located in the home network and is available, the home network commences a call set-up by setting up resources for performing circuit-switched to packet-switched bearer translation (step 308). An evaluation is then made to determine whether call progress is to be provided to the calling party (step 310). If call progress is to be provided to the calling party, resources are then set up to provide call progress to the calling party (step 312). A final response is then sent to the GSTN for the call request (step 314). If no call progress information is to be provided to the calling party at step 310, call processing proceeds to send a final response for the call request to the GSTN according to step 314. After a final response for the call request has been sent, call processing proceeds to terminate call progress to the calling party if resources have been previously set up therefor (step 334).

Returning again to step 306, in the event the called device is not located in the home network and the home MSCe has determined that an IP call control protocol (e.g., SIP) and a packet-based bearer transport (e.g., IP) can be utilized between the home and serving network, resources are set up for circuit-switched to packet-switched bearer translation (step 316). A SIP INVITE message is sent to the serving network (step 318), and the home network awaits a reply thereto (step 320). An evaluation is then made to determine if the received message is a provisional message directing the home network to provide call progress to the call originator (step 322). If the received message is a provisional message directing the home network to provide call progress to the call originator, resources are set up to provide call progress to the calling party (step 324), and processing returns to step 320 to await additional messaging from the serving network.

Returning again to step 322, in the event the message received from the serving network is not a provisional message to provide call progress to the call originator, an evaluation is made to determine if the received message is a provisional message to terminate call progress signaling to the calling party (step 326). If the received message is evaluated as a message to terminate call progress, resources used for providing call progress to the calling party are de-allocated if call progress signaling is being provided to the calling party (step 328), and processing returns to step 320 to await receipt of additional messaging from the serving network.

Returning again to step 326, if the received message is not evaluated as a provisional message to terminate call progress to the calling party, the received message may then be evaluated as a fmal response to the INVITE message sent to the serving network (step 330), and a final response may then be sent to the GSTN for the call request (step 332).

After a final response for the call request has been sent to the GSTN according to either step 314 or 332, any resources that have not be de-allocated for providing call progress to the calling party may then be de-allocated (step 334), and the call setup process is then completed (step 336).

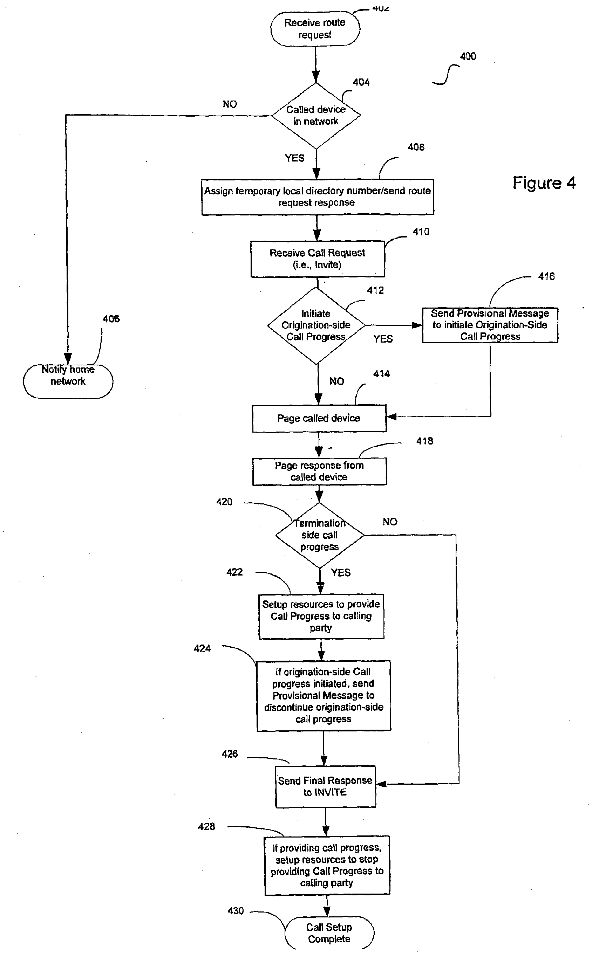

Figure 4 is a flowchart 400 of embodiments for call processing performed by a serving network. Call processing procedures depicted in Figure 4 are representative of processing performed from the aspect of a serving network MSCe, and not all functions performed for call processing are shown. Rather, the processing steps shown in Figure 4 are pertinent to call progress provisioning.

The call processing routine begins on receipt of a route request that identifies a targeted terminal device (step 402), e.g., by way of the called device's MSID. The serving network then determines if the called device is located within the network (step 404). If the called device is not within the network, the network notifies the home network accordingly (step 406).

Returning again to step 404, if the called device is located within the network, the home network assigns a temporary local directory number (TLDN) for the purpose of associating any future call request to the called device and sends a route request response to the home network (step 408). The serving network then awaits receipt of a call request, e.g., an INVITE message containing the TLDN from the home network (step 410). An evaluation is then made to determine if the serving network is to direct the home network to initiate origination-side call progress signaling to the calling party (step 412). In the event origination-side call progress is not to be provided, the call processing routine proceeds to page the called terminal device (step 414). In the event the serving network determines to initiate origination-side call progress at step 412, a provisional message is sent to the home network directing the home network to provide call progress to the calling party (step 416), and the serving network then proceeds to page the called terminal device according to step 414. After the called terminal device is paged, the serving MSCe awaits receipt of a page response from the called terminal device (step 418). Responsive to receipt of a page response from the called terminal device, evaluation is made to determine whether termination-side call progress is to be provided to the calling party (step 420). If termination-side call progress is not to be provided to the calling party, call processing proceeds to send the final response to the call request (step 426).

Returning again to step 420, in the event that termination-side call progress is to be provided to the calling party, resources are set up to provide call progress to the calling party (step 422). A provisional message is then sent to the home network to discontinue origination-side call progress if origination-side call progress has previously been initiated (step 424). Call processing then proceeds by sending the final response to the call request according to step 426. After a final response to the call request is sent, a termination of call progress is made if resources have been setup to provide call progress to the call originator (step 428), and the call setup is then completed (step 430).

The processing steps shown and described in Figures 3 and 4 are not intended to represent complete functionality performed by respective home and serving networks, but rather are illustrative and are intended to facilitate an understanding of the invention. Additionally, processing steps shown and described in Figures 3 and 4 are not intended to imply process serialization as one or more of the processing steps may be performed in parallel with other processing steps. Moreover, the arrangement of processing steps is illustrative only, and various processing steps may be re-ordered without departing from the embodiments described herein.

As described, embodiments provide mechanisms for call progress to be provided to a calling party that has placed a call to a terminal device that has roamed outside the serving area of the home LMSD network. The serving LMSD network may direct the home LMSD network to send call progress. In one embodiment, the serving LMSD network directs the home LMSD network to initiate call progress in response to the receipt of a SIP INVITE message by the serving LMSD network. The serving LMSD network may direct the home LMSD network to discontinue call progress in response to the establishment of a bearer channel from the serving LMSD network to the home LMSD network. The serving network thereafter may provide call progress to the calling party back from the serving MGW through the home MGW and the GSTN. In another embodiment, the serving LMSD network might never direct the home LMSD network to initiate call progress. After the establishment of the bearer channel from the serving LMSD network to the home LMSD network, the serving network thereafter may provide call progress to the calling party back from the serving MGW through the home MGW and the GSTN.

Although embodiments of the present disclosure have been described in detail, those skilled in the art should understand that they may make various changes, substitutions and alterations herein without departing from the scope of the present disclosure. Accordingly, all such changes, substitutions and alterations are intended to be included within the scope of the present disclosure as defmed in the following claims. In the claims, means-plus-function clauses are intended to cover the structures described herein as performing the recited function and not only structural equivalents, but also equivalent structures.

### REFERENCES AND ACRONYM DEFINITIONS

| | |
|---|---|
| ACM | Address Complete Message. Defined as part of [ISUP] |
| ADD | H.248 Command - The Add command adds a Termination to a Context. The Add command on the first Termination in a Context is used to create a Context. |
| ANM | Answer Message. Defined as part of [ISUP] |
| BS | Base Station |
| Calling Party | The originator of the call. |
| Call Progress | A signal (e.g., an audible signal, visual signal, physical signal, or another sensory indication) sent to the calling party prior to the called party answering that informs the calling party that call establishment is proceeding. |
| CDMA | Code division multiple access |
| CODEC | Compressor/decompressor - a codec is any technology for compressing and decompressing data |
| EVRC | Enhanced Variable Rate Codecs |
| | The Enhanced Variable Rate Codec (EVRC) compresses each 20 milliseconds of 8000 Hz, 16-bit sampled speech input into output frames in one of the three different sizes: Rate 1 (171 bits), Rate 1/2 (80 bits), or Rate 1/8 (16 bits). |
| | The EVRC codec is defined in: 3GPP2 C.S0014, "Enhanced Variable Rate Codec, Speech Service Option 3 for Wideband Spread Spectrum Digital Systems", January 1997. |
| GSTN | Global Switched Telephone Network |
| G.711 | Defined by ITU-T Recommendation G.711, "Pulse Code Modulation (PCM) of Voice Frequencies". |
| H.248 | Defines the protocols used between elements of a physically decomposed multimedia gateway (e.g., ITU-T Recommendation H.248.1). |
| HLRe | The HLRe is a network entity that supports non-IP Terminal devices (e.g., legacy mobile stations) in an IP network. The HLRe differs from an HLR in its interfaces and itsfunctionality. The HLRe has IP signaling interfaces. |
| lAM | Initial Address Message. Defined as part of [ISUP] |
| INVITE | A SIP Method (defined is RFC3261) that that specifies the action that a calling party wants from a called party. |
| IOS | Interoperability Specification that is defmed in 3GPP2 A.S0011-C through A.S0017-C. |
| IP | Internet Protocol - there are two version of IP, IPv4 (defined in IETF RFC 0791) and IPv6 (defmed in IETF RFC 2460). |
| ISUP | ISDN User Part. Defined in either ITU-T Q.761-764 or ANSI T1.113-2000 |
| LMSD | Legacy MS Domain |
| MGW | Media GateWay |
| MODIFY | H.248 command - The Modify command modifies the properties, events and signals of a Termination. |
| MS | Mobile Station - wireless terminal device |
| MSCe | Mobile Switching Center emmulation |
| MSID | Mobile Station Identifier. Examples for CDMA might include 10-digit example of an E.164 number or an IMSI (ITU-T Recommendation E.212). |
| Origination-Side Ringback | Call Progress (ringback tones) that ia generated by some element within a Network (e.g., Home network of called party) other than the Serving Network presently serving the called terminal device. |
| PRACK | Provisional Response ACKnowledgement - An extension to the Session Initiation Protocol (SIP) providing reliable provisional response messages (defined in IETF RFC 3262) |
| [RFC3261] | IETF RFC 3261, "The Session Initiation Protocol". June 2002, IETF, |
| [RFC3262] | IETF RFC 3262, " Reliability of Provisional Responses in the Session Initiation Protocol (SIP)". June 2002, |
| Reply | Reply to an H.248 Command (e.g., ADD) |
| RTP | Real-Time Transport Protocol (defined in IETF RFC 1889) |
| SDP | Session Description Protocol (e.g., as defined in RFC 2327) |
| Serving Network | The network in which the terminal device (e.g., MS) is currently registered. |
| SIP | Session Initiation Protocol (defined in RFC 3261) |
| SIP-T | Session Initiation Protocol for Telephones (e.g., as defined in RFC 3272). The use of SIP with a message body that allows for encapsulating ISUP information. |
| SS7 | Signaling System Number 7 |
| Termination-Side Ringback | Call Progress (ringback tones) that is generated by some element within the Network supporting the called party (e.g., a MGW or a terminal device) |
| Transcoder | A function (e.g., implementaed in Software or Handware) that changes data from one format to another (e.g., from EVRC toG.711) |
| UDP | User Datagram Protocol. Protocol defmed in IETF RFC 0768. |
| VLR | The Visitor Location register (VLR) is the location register other than the HLRe used by an MSCe to retrieve information for handling of calls to or from a visiting subscriber. The VLR may, or may not be located within, and be indistinguishable from an MSCe. The VLR may serve more than one MSCe. |
| TIA-41 | ANSI/TIA/EIA-41-D "Cellular Radiotelecommunications Intersystem Operations", December 1997. |

## Claims

1. A method of providing call progress to a calling party, comprising:
(302) receiving a circuit-switched call origination message in a home legacy mobile station domain, wherein the circuit₋switched call origination message specifies a destination terminal device having a directory number assigned with the home legacy mobile station domain;
(304) identifying a serving legacy mobile station domain in which the terminal device is registered;
(318) transmitting, from the home legacy mobile station domain to the serving legacy mobile station domain, a call origination message that requests the terminal device to a call with the calling party;
(320) receiving, by the home legacy mobile station domain from the serving legacy mobile station domain, a first message that requests the home legacy mobile station domain tn provide a call progress signal to the calling party prior to establishment of a bearer path between the serving legacy mobile station domain and a telephone network of the calling party; and
(334) providing, by the home legacy mobile station domain, a first call progress signal to the calling party.

2. The method of claim 1, wherein receiving (302) the circuit-switched call origination message comprises receiving an integrated Services User Part call origination message.

3. The method of claim 1, wherein transmitting (318) the call origination message comprises transmitting a session initiation protocol INVITE message that allows for encapsulation of Integrated Services User Part information.

4. The method of claim 1, wherein receiving (320) the first message comprises receiving a Cession Initiation Protocol 180 Ringing provisional response message.

5. The method of claim 1, further comprising (326) receiving, by the home legacy mobile station domain from the serving legacy mobile station domain, a second message providing a request for the home legacy mobile station domain to discontinue the first call progress signal, wherein the serving legacy mobile station domain sends the second message after receiving a paging response from the terminal device.

6. The method of claim 5, wherein receiving the second message comprises receiving a session initiation protocol provisional response message.

7. The method of claim 6, further comprising (328) providing, by the serving legacy mobile station domain a second call progress signal to the calling party after the home legacy mobile station domain discontinues the first call progress signal.

8. A computer-readable medium having computer-executable instructions for execution by a processing system, the computer-executable instructions for performing a method of providing call progress to a calling party, comprising:
instructions for interpreting a circuit-switched call origination message in a home legacy mobile station domain, wherein the circuit-switched call origination message specifies a destination terminal device having a directory number assigned to the home legacy mobile station domain;
instructions for identifying a serving legacy mobile station domain in which the terminal device is registered;
instructions for constructing and transmitting, from the home legacy mobile station domain to the serving legacy mobile station domain, a call origination message that requests the terminal device to join a call with the calling party;
instructions for receiving, by the home legacy mobile station domain from the serving legacy mobile station domain, a first message that requests the home legacy mobile station domain to provide a call progress signal to the calling party prior to establishment of a bearer path between the serving legacy mobile station domain and a telephone network of the calling party; and
instructions for providing, by the home legacy mobile station domain, a first call progress signal to the calling party.

9. The computer-readable medium of claim 8, wherein the instructions for interpreting a circuit-switched call origination message comprise instructions for interpreting Integrated Services User Part call origination message.

10. The computer-readable medium of claim 8, wherein the instructions for constructing and transmitting the call origination message comprise instructions for constructing and transmitting a session initiation protocol INVITE message that allows for encapsulation of Integrated Services User Part in formation.

11. The computer-readable medium of claim 8, wherein the instructions for receiving the first message comprise instructions that receive a session initiation protocol 180 Ringing provisional response message.

12. The computer-readable medium of claim 8, further comprising instructions for receiving and interpreting, by the home legacy mobile station domain from the serving legacy mobile station domain, a second message providing a request for the home legacy mobile station domain to discontinue the first call progress signal, wherein the serving legacy mobile station domain sends the second message after receving a paging response from the terminal device.

13. The computer-readable medium of claim 12, wherein the instructions for receiving and interpreting the second message comprise instructions that receive and interpret a Session Initiation Protocol provisional response message.

14. The cumputer-readable medium of claim 13, further comprising instructions for providing, by the serving legacy mobile station domain, a second call progress signal to the calling party after the home legacy mobile station domain discontinues the first call progress signal.

15. A telecommunications system (100) for connecting a circuit-switched calling party and a terminal device registered in a legacy mobile station domain, comprising:
a serving legacy mobile station domain (Network 2) in which the terminal device is registered; and
a home legacy mobile station domain (Network 1) having a directory number of the terminal device aligned thereto that is adapted to receive a *circuit-switched* call origination message from the calling party and to transmit a call origination message to the serving legacy mobile station domain requesting the terminal device to join a call with the calling party and that, in response to receipt of a first message from the serving Legacy mobile station domain requesting the home legacy mobile station to provide call progress to the calling party prior to establishment of a bearer path between the serving legacy mobile station domain and a telephone network of the calling party, is adapted to provide a first call progress signal to the calling party.

16. The telecommunications system of claim 15, wherein the circuit-switched call origination message comprises au Integrated Services User Part call origination message.

17. The telecommunications system of claim 15, wherein the call origination message transmitted from the home legacy mobile station domain to the serving legacy mobile station domain comprises a Session Initiation Protocol INVITE message.

18. The telecommunications system of claim 15, wherein the serving legacy mobile station domain comprises a serving mobile switching center emulation (45) and the home legacy mobile station domain comprises a home mobile switching center emulation (17) and wherein the serving mobile switching center emulation is adapted to transmit a second message to the home mobile switching center emulation providing a request for the home legacy mobile station domain to discontinue the first call progress signal provided to the calling party.

19. The telecommunications system of claim 18. wherein the second message comprises 3 session initiation protocol provisional response message.

20. The telecommunications system of claim 18, wherein the serving legacy mobile station domain is adapted to provide a second call progress signal to the calling party responsive to the home legacy mobile station domain discontinuing the first call progress signal.

## Patentansprüche

1. Verfahren zur Bereitstellung eines Anruffortschritts für einen rufenden Teilnehmer, mit:
(302) Empfangen einer leitungsvermittelten Anrufursprungsnachricht in einer Home-Legacy- (Heimat-Altlast-) -Mobilstationsdomäne, wobei die leitungsvermittelte Anrufursprungsnachricht eine Zielendeinrichtung mit einer Teilnehmerrufnummer spezifiziert, die der Home-Legacy-Mobilstationsdomäne zugeteilt ist;
(304) Identifizieren einer Serving-Legacy- (Versorgenden-Altlast-) -Mobilstations-domäne, in welcher die Endeinrichtung registriert ist;
(318) Übertragen einer Anrufursprungsnachricht, die die Endeinrichtung zu einem Anruf mit dem rufenden Teilnehmer auffordert, von der Home-Legacy-Mobilstationsdomäne an die Serving-Legacy-Mobilstationsdomäne;
(320) Empfangen einer ersten Nachricht durch die Home-Legacy-Mobilstations-domäne von der Serving-Legacy-Mobilstationsdomäne, die die Home-Legacy-Mobilstationsdomäne auffordert, dem rufenden Teilnehmer ein Anruffortschrittssignal vor der Herstellung eines Trägerwegs zwischen der Serving-Legacy-Mobilstationsdomäne und einem Telefonnetz des rufenden Teilnehmers bereitzustellen; und
(334) Bereitstellen eines ersten Anruffortschrittssignals für den rufenden Teilnehmer durch die Home-Legacy-Mobilstationsdomäne.

2. Verfahren nach Anspruch 1, wobei das Empfangen (302) der leitungsvermittelten Anrufursprungsnachricht das Empfangen einer Dienstintegrierender-Anwenderteil- (Integrated Services User Part) - Anrufursprungsnachricht umfasst.

3. Verfahren nach Anspruch 1, wobei das Übertragen (318) der Anrufursprungsnachricht das Übertragen einer Sitzungsinitiationsprotokoll- (session initiation protocol) -INVITE-Nachricht umfasst, welche die Verkapselung einer Dienstintegrierender-Anwenderteil-Information erlaubt.

4. Verfahren nach Anspruch 1, wobei das Empfangen (320) der ersten Nachricht das Empfangen einer provisorischen Sitzungsinitiationsprotokoll-180-Klingeln-Antwort-nachricht umfasst.

5. Verfahren nach Anspruch 1, ferner mit dem (326) Empfangen einer zweiten Nachricht durch die Home-Legacy-Mobilstationsdomäne von der Serving-Legacy-Mobilstationsdomäne, welche eine Anforderung für die Home-Legacy-Mobilstationsdomäne zur Unterbrechung des ersten Anruffortschrittssignals bereitstellt, wobei die Serving-Legacy-Mobilstationsdomäne die zweite Nachricht nach dem Empfang einer Paging-Antwort von der Endeinrichtung sendet.

6. Verfahren nach Anspruch 5, wobei das Empfangen der zweiten Nachricht das Empfangen einer provisorischen Sitzungsinitiationsprotokoll-Antwortnachricht umfasst.

7. Verfahren nach Anspruch 6, ferner mit dem (328) Bereitstellen eines zweiten Anruffortschrittsignals durch die Serving-Legacy-Mobilstationsdomäne für den rufenden Teilnehmer, nachdem die Home-Legacy-Mobilstationsdomäne das erste Anruffortschrittssignal unterbricht.

8. Computerlesbares Medium mit computerausführbaren Anweisungen zur Ausführung durch ein Verarbeitungssystem, wobei die computerausführbaren Anweisungen zum Durchführen eines Verfahrens zur Bereitstellung eines Anruffortschritts für einen rufenden Teilnehmer dienen, mit:
Anweisungen zum Interpretieren einer leitungsvermittelten Anrufursprungsnachricht in einer Home-Legacy-Mobilstationsdomäne, wobei die leitungsvermittelte Anrufursprungsnachricht eine Zielendeinrichtung mit einer Teilnehmerrufnummer spezifiziert, die der Home-Legacy-Mobilstationsdomäne zugeteilt ist;
Anweisungen zum Identifizieren einer Serving-Legacy-Mobilstationsdomäne, in welcher die Endeinrichtung registriert ist;
Anweisungen zum Aufbauen und Übertragen einer Anrufursprungsnachricht, die die Endeinrichtung auffordert, einen Anruf mit dem rufenden Teilnehmer zu verbinden, von der Home-Legacy-Mobilstationsdomäne an die Serving-Legacy-Mobilstationsdomä-ne;
Anweisungen zum Empfangen einer ersten Nachricht durch die Home-Legacy-Mobilstationsdomäne von der Serving-Legacy-Mobilstationsdomäne, die die Home-Legacy-Mobilstationsdomäne auffordert, dem rufenden Teilnehmer ein Anruffortschrittssignal vor der Herstellung eines Trägerwegs zwischen der Serving-Legacy-Mobilstationsdomäne und einem Telefonnetz des rufenden Teilnehmers bereitzustellen; und
Anweisungen zum Bereitstellen eines ersten Anruffortschrittssignals für den rufenden Teilnehmer durch die Home-Legacy-Mobilstationsdomäne.

9. Computerlesbares Medium nach Anspruch 8, wobei die Anweisungen zum Interpretieren einer leitungsvermittelten Anrufursprungsnachricht Anweisungen zum Interpretieren einer Dienstintegrierender-Anwenderteil-Anrufursprungsnachricht umfassen.

10. Computerlesbares Medium nach Anspruch 8, wobei die Anweisungen zum Aufbauen und Übertragen der Anrufursprungsnachricht Anweisungen zum Aufbauen und Übertragen einer Sitzungsinitiationsprotokoll-INVITE-Nachricht umfassen, die die Verkapselung einer Dienstintegrierender-Anwenderteil-Information erlaubt.

11. Computerlesbares Medium nach Anspruch 8, wobei die Anweisungen zum Empfangen der ersten Nachricht Anweisungen umfassen, welche eine provisorische Sitzungsinitiationsprotokoll-180-Klingeln-Antwortnachricht empfangen.

12. Computerlesbares Medium nach Anspruch 8, ferner mit Anweisungen zum Empfangen und Interpretieren einer zweiten Nachricht durch die Home-Legacy-Mobilstationsdomäne von der Serving-Legacy-Mobilstationsdomäne, die eine Aufforderung für die Home-Legacy-Mobilstationsdomäne zur Unterbrechung des ersten Anruffortschrittssignals bereitstellt, wobei die Serving-Legacy-Mobilstationsdomäne die zweite Nachricht nach dem Empfangen einer Paging-Antwort von der Endeinrichtung sendet.

13. Computerlesbares Medium nach Anspruch 12, wobei die Anweisungen zum Empfangen und Interpretieren der zweiten Nachricht Anweisungen umfassen, die eine provisorische Sitzungsinitiationsprotokoll-Antwortnachricht empfangen und interpretieren.

14. Computerlesbares Medium nach Anspruch 13, ferner mit Anweisungen zum Bereitstellen eines zweiten Anruffortschrittsignals für den rufenden Teilnehmer durch die Serving-Legacy-Mobilstationsdomäne, nachdem die Home-Legacy-Mobilstationsdomäne das erste Anruffortschrittsignal unterbricht.

15. Telekommunikationssystem (100) zum Verbinden eines leitungsvermittelten rufenden Teilnehmers und einer Endeinrichtung, die in einer Legacy-Mobilstationsdomäne registriert ist, mit:
einer Serving-Legacy-Mobilstationsdomäne (Netzwerk 2), in welcher die Endeinrichtung registriert ist; und
einer Home-Legacy-Mobilstationsdomäne (Netzwerk 1) mit einer Teilnehmerrufnummer der Endeinrichtung, die dieser zugeteilt ist, die dazu ausgelegt ist, eine leitungsvermittelte Anrufursprungsnachricht vom rufenden Teilnehmer zu empfangen und eine Anrufursprungsnachricht an die Serving-Legacy-Mobilstationsdomäne zu übertragen, welche die Endeinrichtung auffordert, einen Anruf mit dem rufenden Teilnehmer zu verbinden, und die als Antwort auf den Empfang einer ersten Nachricht von der Serving-Legacy-Mobilstationsdomäne, welche die Home-Legacy-Mobilstation auffordert, dem rufenden Teilnehmer einen Anruffortschritt vor der Herstellung eines Trägerwegs zwischen der Serving-Legacy-Mobilstationsdomäne und einem Telefonnetz des rufenden Teilnehmers bereitzustellen, dazu ausgelegt ist, dem rufenden Teilnehmer ein erstes Anruffortschrittssignal bereitzustellen.

16. Telekommunikationssystem nach Anspruch 15, wobei die leitungsvermittelte Anrufursprungsnachricht eine Dienstintegrierender-Anwenderteil-Anrufursprungsnach-richt umfasst.

17. Telekommunikationssystem nach Anspruch 15, wobei die Anrufursprungsnachricht, die von der Home-Legacy-Mobilstationsdomäne zur Serving-Legacy-Mobilstationsdomäne übertragen wird, eine Sitzungsinitiationsprotokoll-INVITE-Nachricht umfasst.

18. Telekommunikationssystem nach Anspruch 15, wobei die Serving-Legacy-Mobilstationsdomäne eine versorgende Mobilvermittlungsstellenemulation (45) umfasst und die Home-Legacy-Mobilstationsdomäne eine Home-Mobilvermittlungsstellenemulation (17) umfasst und wobei die versorgende Mobilvermittlungsstellenemulation dazu ausgelegt ist, eine zweite Nachricht an die Home-Mobilvermittlungsstellenemulation zu übertragen, die eine Aufforderung für die Home-Legacy-Mobilstationsdomäne bereitstellt, das dem rufenden Teilnehmer bereitgestellte erste Anruffortschrittssignal zu unterbrechen.

19. Telekommunikationssystem nach Anspruch 18, wobei die zweite Nachricht eine provisorische Sitzungsinitiationsprotokoll-Antwortnachricht umfasst.

20. Telekommunikationssystem nach Anspruch 18, wobei die Serving-Legacy-Mobilstationsdomäne dazu ausgelegt ist, dem rufenden Teilnehmer ein zweites Anruffortschrittssignal bereitzustellen, das auf das Unterbrechen des ersten Anruffortschrittssignals durch die Home-Legacy-Mobilstationsdomäne reagiert.

## Revendications

1. Procédé de fourniture d'indications de progression d'appel à une partie appelante, comprenant les étapes consistant à :
recevoir (302) un message d'origine d'appel avec commutation de circuits sur un domaine de station mobile classique de rattachement, dans lequel le message d'origine d'appel avec commutation de circuits spécifie un dispositif terminal de destination ayant un numéro préfixe de zone attribué au domaine de station mobile classique de rattachement ;
identifier (304) un domaine de station mobile classique de desserte dans lequel est enregistré le dispositif terminal ;
émettre (318), entre le domaine de station mobile classique de rattachement et le domaine de station mobile classique de desserte, un message d'origine d'appel qui invite le dispositif terminal à un appel avec la partie appelante ;
recevoir (320), par le domaine de station mobile classique de rattachement en provenance du domaine de station mobile classique de desserte, un premier message qui demande au domaine de station mobile classique de rattachement de fournir un signal de progression d'appel à la partie appelante avant l'établissement d'un trajet de supports de transmission entre le domaine de station mobile classique de desserte et un réseau téléphonique de la partie appelante ; et
fournir (334) par le domaine de station mobile classique de rattachement un premier signal de progression d'appel à la partie appelante.

2. Procédé selon la revendication 1, dans lequel l'étape de réception (302) du message d'origine d'appel avec commutation de circuits comprend l'étape consistant à recevoir un message d'origine d'appel du sous-système utilisateur avec intégration de services.

3. Procédé selon la revendication 1, dans lequel l'étape d'émission (318) du message d'origine d'appel comprend l'étape consistant à émettre un message INVITE du protocole de lancement de session qui permet d'encapsuler les informations du sous-système utilisateur avec intégration de services.

4. Procédé selon la revendication 1, dans lequel l'étape de réception (320) du premier message comprend l'étape consistant à recevoir un message de réponse provisoire de sonnerie 180 du protocole de lancement de session.

5. Procédé selon la revendication 1, comprenant en outre l'étape consistant à recevoir (326), par le domaine de station mobile classique de rattachement en provenance du domaine de station mobile classique de desserte, un second message fournissant une demande adressée au domaine de station mobile classique de rattachement de cesser le premier signal de progression d'appel, le domaine de station mobile classique de desserte envoyant le second message après réception d'une réponse de recherche de personne en provenance du dispositif terminal.

6. Procédé selon la revendication 5, dans lequel l'étape de réception du second message comprend l'étape consistant à recevoir un message de réponse provisoire du protocole de lancement de session.

7. Procédé selon la revendication 6, comprenant en outre l'étape consistant à fournir (328) par le domaine de station mobile classique de desserte un second signal de progression d'appel à la partie appelante après que le domaine de station mobile classique de rattachement a cessé le premier signal de progression d'appel.

8. Support lisible par ordinateur portant des instructions exécutables par ordinateur, destinées à être exécutées par un système de traitement, les instructions exécutables par ordinateur étant destinées à exécuter un procédé de fourniture d'indications de progression d'appel à une partie appelante, comprenant :
des instructions destinées à interpréter un message d'origine d'appel avec commutation de circuits sur un domaine de station mobile classique de rattachement, dans lequel le message d'origine d'appel avec commutation de circuits spécifie un dispositif terminal de destination ayant un numéro préfixe de zone attribué au domaine de station mobile classique de rattachement ;
des instructions destinées à identifier un domaine de station mobile classique de desserte dans lequel est enregistré le dispositif terminal ;
des instructions destinées à construire et émettre, entre le domaine de station mobile classique de rattachement et le domaine de station mobile classique de desserte, un message d'origine d'appel qui invite le dispositif terminal à se joindre à un appel avec la partie appelante ;
des instructions destinées à recevoir par le domaine de station mobile classique de rattachement en provenance du domaine de station mobile classique de desserte, un premier message qui demande au domaine de station mobile classique de rattachement de fournir un signal de progression d'appel à la partie appelante avant l'établissement d'un trajet de supports de transmission entre le domaine de station mobile classique de desserte et un réseau téléphonique de la partie appelante ; et
des instructions destinées à fournir par le domaine de station mobile classique de rattachement un premier signal de progression d'appel à la partie appelante.

9. Support lisible par ordinateur selon la revendication 8, dans lequel les instructions destinées à interpréter un message d'origine d'appel avec commutation de circuits comprennent des instructions destinées à interpréter un message d'origine d'appel du sous-système utilisateur avec intégration de services.

10. Support lisible par ordinateur selon la revendication 8, dans lequel les instructions destinées à construire et émettre le message d'origine d'appel comprennent des instructions destinées à construire et transmettre un message INVITE du protocole de lancement de session qui permet d'encapsuler les informations du sous-système utilisateur avec intégration de services.

11. Support lisible par ordinateur selon la revendication 8, dans lequel les instructions destinées à recevoir le premier message comprennent des instructions qui reçoivent un message de réponse provisoire de sonnerie 180 du protocole de lancement de session.

12. Support lisible par ordinateur selon la revendication 8, comprenant en outre des instructions destinées à recevoir et interpréter, par le domaine de station mobile classique de rattachement et en provenance du domaine de station mobile classique de desserte, un second message fournissant une demande adressée au domaine de station mobile classique de rattachement de cesser le premier signal de progression d'appel, le domaine de station mobile classique de desserte envoyant le second message après réception d'une réponse de recherche de personne en provenance du dispositif terminal.

13. Support lisible par ordinateur selon la revendication 12, dans lequel les instructions destinées à recevoir et interpréter le second message comprennent des instructions qui reçoivent et interprètent un message de réponse provisoire du protocole de lancement de session.

14. Support lisible par ordinateur selon la revendication 13, comprenant en outre des instructions destinées à fournir par le domaine de station mobile classique de desserte un second signal de progression d'appel à la partie appelante après que le domaine de station mobile classique de rattachement a cessé le premier signal de progression d'appel.

15. Système de télécommunications (100) destiné à connecter une partie appelante avec commutation de circuits et un dispositif terminal enregistré sur un domaine de station mobile classique, comprenant :
un domaine de station mobile classique de desserte (réseau 2) auprès duquel le dispositif terminal est enregistré ; et
un domaine de station mobile classique de rattachement (réseau 1), auquel est attribué un numéro préfixe de zone, qui est conçu pour recevoir un message d'origine d'appel avec commutation de circuits de la partie appelante et pour émettre un message d'origine d'appel vers le domaine de station mobile classique de desserte qui demande au dispositif terminal de se joindre à un appel avec la partie appelante et qui, à la suite de la réception d'un premier message provenant du domaine de station mobile classique de desserte qui demande à la station mobile classique de rattachement de fournir des indications de progression d'appel à la partie appelante avant d'établir un trajet de supports de transmission entre le domaine de station mobile classique de desserte et un réseau téléphonique de la partie appelante, est conçu pour fournir un premier signal de progression d'appel à la partie appelante.

16. Système de télécommunications selon la revendication 15, dans lequel le message d'origine d'appel avec commutation de circuits comprend un message d'origine d'appel du sous-système utilisateur avec intégration de services.

17. Système de télécommunications selon la revendication 15, dans lequel le message d'origine d'appel émis entre le domaine de station mobile classique de rattachement et le domaine de station mobile classique de desserte comprend un message INVITE du protocole de lancement de session.

18. Système de télécommunications selon la revendication 15, dans lequel le domaine de station mobile classique de desserte comprend une émulation de centre de commutation de mobiles de desserte (45) et le domaine de station mobile classique de rattachement comprend une émulation de centre de commutation de mobiles de rattachement (17) et dans lequel l'émulation de centre de commutation de mobiles est conçue pour émettre un second message vers l'émulation de centre de commutation de mobiles de rattachement qui contient une demande adressée au domaine de station mobile classique de rattachement de cesser le premier signal de progression d'appel fourni à la partie appelante.

19. Système de télécommunications selon la revendication 18, dans lequel le second message comprend un message de réponse provisoire du protocole de lancement de session.

20. Système de télécommunications selon la revendication 18, dans lequel le domaine de station mobile classique de desserte est conçu pour fournir un second signal de progression d'appel à la partie appelante, à la suite de la cessation du premier signal de progression d'appel par le domaine de station mobile classique de rattachement.
